# EUROPÄISCHE PATENTSCHRIFT

(11) **EP 2 715 279 B1**
(45) Veröffentlichungstag und Bekanntmachung des Hinweises auf die Patenterteilung: **04.03.2020**
(21) Anmeldenummer: 12728419.8
(22) Anmeldetag: 22.05.2012
(51) Int. Cl.: G01B 11/275

(54) **VORRICHTUNG UND VERFAHREN ZUR FAHRWERKSVERMESSUNG EINES KRAFTFAHRZEUGS**
METHOD AND DEVICE FOR PERFORMING A WHEEL ALIGNMENT CHECK ON A MOTOR VEHICLE
PROCÉDÉ ET DISPOSITIF DE CONTRÔLE DE LA GÉOMÉTRIE DES TRAINS ROULANTS D'UN VÉHICULE AUTOMOBILE

(30) Priorität: 24.05.2011 DE 102011076394; 17.11.2011 DE 102011086548
(43) Veröffentlichungstag der Anmeldung: 09.04.2014
(73) Patentinhaber: Beissbarth GmbH, 80993 München (DE)
(72) Erfinder: MACCHIA, Adriano, 80798 Muenchen (DE); WAGMANN, Christian, 80538 Muenchen (DE)
(74) Vertreter: Schmitt-Nilson Schraud Waibel Wohlfrom Patentanwälte Partnerschaft mbB
(86) Internationale Anmeldenummer: PCT/EP2012/059470
(87) Internationale Veröffentlichungsnummer: WO 2012/160056

(56) Entgegenhaltungen:
- WO-A1-2010/028946
- US-A- 5 535 522
- US-A- 5 731 870
- US-A- 5 943 783
- US-A1- 2003 147 068
- US-A1- 2006 152 711

## Beschreibung

Die Erfindung betrifft eine Vorrichtung sowie ein Verfahren zur Fahrwerksvermessung eines Kraftfahrzeugs.

### Stand der Technik

Bei bekannten Vorrichtungen zur Fahrwerksvermessung mit mehreren Messeinheiten ist es notwendig, dass deren Position bei der Fahrwerksvermessung zueinander bekannt ist. Dazu sind die Messeinheiten häufig in bekannter Position zueinander bspw. auf einem Rahmen angebracht. Solche Vermessungsvorrichtungen sind relativ unflexibel. Bei anderen Vermessungsvorrichtungen, deren Messeinheiten die Position zueinander fortlaufend bestimmen können, sind hierfür eine Vielzahl von Elementen für die Messeinheiten erforderlich, was solche Vermessungsvorrichtungen aufwendig und teuer macht.

Aus der EP 1 184 640 A2 ist eine Fahrwerkvermessungseinrichtung mit vier Messköpfen zur Bestimmung der Radstellungen der Räder eines Kraftfahrzeuges auf einem Messplatz bekannt. Jeder der vier Messköpfe der EP 1 184 640 A2 weist wenigstens eine Kamera auf, die auf ein im Blickfeld der Kamera angeordnetes, in einer festen Beziehung zu dem Rad des Kraftfahrzeuges positioniertes und parallel zur Radebene liegendes Messtarget ausgerichtet ist. Die Bilder der Kamera werden von einer Auswertungseinheit ausgewertet, um die räumliche Lage des Messtargets und damit des Rades bezüglich der Position der Kamera bzw. des Messkopfes zu bestimmen. Die Fahrwerkvermessungseinrichtung der EP 1 184 640 A2 umfasst ein optisches Referenzsystem zur Kalibrierung der Messköpfe der Fahrwerksvermessungseinrichtung bezüglich der Position der Messköpfe zueinander. Eine solche Fahrwerkvermessungseinrichtung ist schon aufgrund der zwingend vorhandenen vier Messköpfe teuer.

Weitere Fahrwerksvermessungseinrichtungen sind aus der WO 2010/028946 A1, US 2003/147068 A1, US 5 535 522 A, US 5 943 783 A, US 2006/152711 A1 und US 5 731 870 A bekannt.

Die Vorrichtung der WO 2010/028946 A1 weist auf jeder Seite des Fahrzeugs jeweils eine Messeinheit auf, die zwischen Vorder- und Hinterachse des Fahrzeugs angeordnet ist, und Bilder von Messtargets am Vorder- und Hinterrad auf der jeweiligen Seite sowie ein Bild eines Referenztargets der Messeinheit auf der gegenüberliegenden Seite erfasst.

Es ist daher die Aufgabe der vorliegenden Erfindung, eine flexible Vorrichtung und ein flexibles Verfahren zur Fahrwerksvermessung eines Kraftfahrzeugs anzugeben, die kostengünstig sind und eine einfache und zuverlässige Vermessung des Kraftfahrzeugfahrwerks mit einer geringen Zahl von Komponenten ermöglichen.

Diese Aufgabe wird durch eine Vorrichtung mit den Merkmalen des unabhängigen Vorrichtungsanspruchs 1 sowie durch ein Verfahren mit den Merkmalen des unabhängigen Verfahrensanspruchs 10 gelöst. Vorteilhafte Weiterbildungen ergeben sich aus den abhängigen Ansprüchen.

### Offenbarung der Erfindung

Eine erfindungsgemäße Vorrichtung zur Fahrwerksvermessung eines Kraftfahrzeugs umfasst eine Vorrichtung gemäß dem unabhängigen Anspruch 1.

Erfindungsgemäß ist die Anzahl der Komponenten der Fahrzeugvermessungsvorrichtung reduziert. Es sind nur zwei Messeinheiten erforderlich, die zudem tragbar sein können, was deren Positionierung gegenüber dem Fahrzeug erheblich vereinfacht. Die erfindungsgemäße Fahrzeugvermessungsvorrichtung ermöglicht eine zuverlässige und fehlerfreie Vermessung.

Die Vorrichtung zur Fahrwerksvermessung umfasst lediglich zwei Messeinheiten, die mittels an den Rädern angebrachter Targets die Ausrichtung der hinteren und der vorderen Räder eines Kraftfahrzeugs vermessen.

Eine Messeinheit der erfindungsgemäßen Vorrichtung zur Fahrwerksvermessung umfasst ein von der auf der jeweils anderen Seite des Kraftfahrzeugs positionierten Messeinheit sichtbares Referenztarget, eine Bildaufnahmeeinheit und eine optische Einrichtung. Die Messeinheit kann beispielsweise in einer Längsposition zwischen den Messtargets einer jeweiligen Seite positioniert werden. Beispielsweise kann die linke Messeinheit auf der linken Kraftfahrzeugseite an einer Längsposition zwischen einem Messtarget an einem linken Hinterrad und einem Messtarget an einem linken Vorderrad des Kraftfahrzeugs positionierbar sein. Außerdem ist es möglich, die Messeinheiten beispielsweise in Fahrzeugquerrichtung gegenüberliegend zu positionieren, wobei sich die Referenztargets der jeweiligen Messeinheiten somit in Fahrzeugquerrichtung gegenüberliegen.

Die optische Einrichtung ist in der Lage, Bilder von mindestens drei Mess- und Referenztargets, die an verschiedenen Positionen im Raum angeordnet sind, auf die Bildaufnahmeeinheit zu lenken.

Die Messtargets sind beispielsweise Platten, auf die in einer bestimmten Anordnung Targetmerkmale angebracht sind. Diese Targetmerkmale können in jeglicher Form, Anzahl und Anordnung auf dem Target angeordnet sein und bilden die Geometrie des Targets. Die Messtargets sind in bekannter Position, zum Beispiel über einen Adapter an einem Rad befestigt. Insbesondere liegen die plattenförmigen Messtargets nicht in Richtung der Fahrzeuglängsachse oder parallel zur jeweiligen Radachse, sondern sie bilden einen Winkel mit der Fahrzeuglängsachse und/oder der jeweiligen Radachse. Dieser Winkel ist insbesondere so groß gewählt, dass die Targetmerkmale auf den plattenförmigen Messtargets von den Messeinheiten gut erkannt werden können. Bei zwischen den Messtargets an den Vorder- und Hinterrädern angeordneten Messeinheiten ist der Winkel der Ebene der plattenförmigen Messtargets größer als 45°, bezogen auf die Fahrzeuglängsachse oder auf die jeweilige Radachse.

Die Referenztargets sind so an den Messeinheiten angebracht, dass sie von der jeweils auf der anderen Fahrzeugseite positionierten Messeinheit sichtbar sind.

Die Bilder der Messtargets werden durch die Auswerteeinrichtung ausgewertet, indem sie mit Referenzbildern der Messtargets verglichen werden. Diese Referenzbilder bestehen aus Bildern der Messtargets, die unter bekannten Winkeln und in bekannten Abständen aufgenommen und in der Auswerteeinrichtung hinterlegt wurden. Durch einen Vergleich der aufgenommenen Bilder mit den Referenzbildern können die Orientierung und die Position der Messtargets und somit auch der Räder relativ zu der Messeinheit ermittelt werden. Zur Ermittlung der Fahrzeuggeometriedaten aus der ermittelten Position der Räder relativ zur Messeinheit, ist es des Weiteren notwendig, die Position der Messeinheiten zueinander zu bestimmen, um die Ausrichtung der linken Messtargets relativ zu den rechten Messtargets zu bestimmen. Die Auswerteeinrichtung ist daher weiterhin dazu ausgebildet, die relative Position der Referenztargets zu ermitteln. Die Referenztargets können, wie auch die Messtargets, auf bekannte Weise an der jeweiligen Messeinrichtung angebracht sein. Aus dieser bekannten Position der Referenztargets zur Messeinrichtung ist weiterhin die Position der Messeinrichtung bestimmbar.

Erfindungsgemäß weist die Bildaufnahmeeinheit eine Bildaufnahmeoberfläche mit einem ersten Bildbereich, mit einem zweiten Bildbereich und mit einem dritten Bildbereich auf, und die optische Einrichtung ist dazu angeordnet und ausgebildet, das Bild des Messtargets des Vorderrads auf den ersten Bildbereich, das Bild des Messtargets des Hinterrads auf den zweiten Bildbereich und das Bild des Referenztargets auf den dritten Bildbereich zu lenken.

Mit einer derartigen Bildaufnahmeeinheit ist es möglich, gleichzeitig Bilder von drei verschiedenen Targets aufzunehmen. Die drei von der Messeinheit zu messenden Targets werden durch die optische Einrichtung jeweils auf getrennten Bildbereichen der Bildaufnahmeoberfläche der Bildaufnahmeeinheit abgebildet. Dies ermöglicht eine schnelle Auswertung der Bilder der Messtargets und des Referenztargets, die durch die optische Einrichtung auf verschiedenen, vorbestimmten Bildbereichen der Bildaufnahmeoberfläche abgebildet werden. Durch die optische Einrichtung wird verhindert, dass die Bilder der Messtargets und des Referenztargets zusammen auf einen Bildbereich fallen, was zur Folge hätte, dass die Bilder vor der Auswertung zunächst dem jeweiligen Mess- oder Referenztarget zugeordnet werden müssten.

Erfindungsgemäß ist die Auswerteeinrichtung derart ausgebildet, dass sie die erfassten Bilder der Referenztargets mit Referenzbildern der Referenztargets vergleicht und daraus die relative Position der Referenztargets ermittelt.

Durch einen Vergleich eines Bildes des Referenztargets mit einem Referenzbild des Referenztargets, das unter einem bekannten Winkel und Anstand zur Aufnahmeeinrichtung aufgenommen wurde, ist es möglich, die tatsächliche Position des Referenztargets zu bestimmen. Dadurch wird die relative Position der Referenztargets besonders einfach und zuverlässig bestimmt, wobei zudem keine zusätzlichen Komponenten in der Fahrwerksvermessungsvorrichtung erforderlich sind.

In einem Ausführungsbeispiel sind die Referenztargets jeweils punktförmig, insbesondere in Form einer LED, ausgebildet, und der Abstand der Messeinheiten in Fahrzeugquerrichtung ist bekannt. Darüber hinaus verfügt jede Messeinheit über einen Neigungssensor. Die Auswerteeinrichtung ist so ausgebildet, dass sie die Fahrzeuggeometriedaten ermittelt, und dabei zur Bestimmung der Position der Messeinheiten zueinander die Bilder der Referenztargets mit Referenzbildern vergleicht, den bekannten Abstand der Messeinheiten in Fahrzeugquerrichtung und die Neigung der beiden Messeinheiten heranzieht.

Ein punktförmiges Referenztarget stellt eine sehr einfache und kostengünstige Form eines Referenztargets dar. Bei einer Verwendung eines solchen Referenztargets ist die zusätzliche Bestimmung der Neigung der Messeinheit und die Kenntnis des Abstands der Messeinheiten in Fahrzeugquerrichtung notwendig, um die Position der Messeinheiten zueinander ermitteln zu können.

In einem weiteren Ausführungsbeispiel sind die Referenztargets jeweils als wenigstens zwei in einer Linie angeordnete Lichtpunkte, insbesondere LEDs, mit vorbestimmtem Abstand, ausgebildet und jede der Messeinheit verfügt über einen Neigungssensor. Bei einem solchen Referenztarget handelt es sich um ein 2D-Target, mit dem der Abstand sowie die winkelmäßige Verschiebung der Messeinheiten zueinander durch den Vergleich mit Referenzbildern der Referenztargets bestimmt werden kann. Zur Berechnung der Geometriedaten des Fahrzeugs durch die Auswerteeinheit ist bei der Verwendung eines solchen 2D-Targets lediglich die durch den Neigungssensor ermittelte Neigung der Messeinheiten notwendig, nicht aber der vorher ermittelte Abstand der Messeinheiten in Fahrzeugquerrichtung zueinander.

In einem weiteren Ausführungsbeispiel sind die Referenztargets als mehrere Lichtpunkte, insbesondere LEDs, in einer Fläche mit jeweils vorbestimmten Abständen zueinander oder als in unterschiedlichen Flächen und Ebenen vorliegende Lichtpunkte, insbesondere LEDs ausgebildet. Ein solches Referenztarget stellt ein 3D-Target dar. Bei der Verwendung eines 3D-Targets ist es möglich, die Orientierung im Raum, d. h. die winkelmäßige Verschiebung sowie die Abstände in Fahrzeuglängs- und-querrichtung sowie die Neigung der Messeinheiten zueinander durch den Vergleich mit einem Referenzbild zu bestimmen, ohne dass hierfür ein zusätzlicher Neigungssensor oder die Kenntnis des Abstands der Messeinheiten zueinander erforderlich ist.

Zusätzlich ist in einem weiteren Ausführungsbeispiel an wenigstens einer der Messeinheiten ein Bewegungssensor vorgesehen, der, wenn er eine Bewegung wenigstens einer der Messeinheiten detektiert, eine Bildaufnahme der Mess- und Referenztargets durch die Bildaufnahmeeinheiten auslöst. Ein solcher Bewegungssensor kann beispielsweise aus einem Pendel bestehen, wobei eine Bewegung einer der Messeinheiten in einem Ausschlag des Pendels resultiert. Dadurch wird sichergestellt, dass, sobald sich die Position der Messeinheiten relativ zueinander oder zu den Messtargets ändert, diese durch eine Bildaufnahme der Mess- und Referenztargets neu ermittelt wird und somit die Fahrzeuggeometriedaten immer dem aktuellen Stand entsprechen.

In einem weiteren Ausführungsbeispiel ist zusätzlich ein Bewegungssensor vorgesehen, der, wenn er eine Bewegung wenigstens eines der Mess- oder Referenztargets oder eine Bewegung des Kraftfahrzeugs detektiert, eine Bildaufnahme der Mess- und Referenztargets durch die Bildaufnahmeeinheiten auslöst. Damit wird erreicht, dass eine Änderung der Position der Mess- oder Referenztargets oder des Kraftfahrzeugs in einer Neuermittlung der Fahrzeuggeometriedaten aus aktuellen Bildaufnahmen der Mess- und Referenztargets resultiert.

In einem weiteren Ausführungsbeispiel sind die Bildaufnahmeeinheiten sowie die Auswerteeinheit für eine periodische oder kontinuierliche Bildaufnahme der Mess- und Referenztargets ausgebildet, wodurch sichergestellt wird, dass die Position der Messeinheiten zueinander regelmäßig aktualisiert wird.

In einem weiteren Ausführungsbeispiel handelt es sich bei der optischen Einrichtung um ein Prisma, um einen Strahlenteiler, um einen Spiegel, um eine Linse oder eine Kombination dieser Elemente, womit Bilder der Mess- und Referenztargets auf den dafür bestimmten Bildbereichen der Bildaufnahmeeinheit abgebildet werden können.

Die Erfindung betrifft des Weiteren einen Messplatz mit einem darauf stehenden Kraftfahrzeug, an dessen Rädern Messtargets angebracht sind, und der eine erfindungsgemäße Vorrichtung zur Fahrwerksvermessung eines Kraftfahrzeugs umfasst. Die Erfindung umfasst des Weiteren ein Verfahren zur Fahrwerksvermessung eines Kraftfahrzeugs gemäß dem unabhängigen Verfahrensanspruch 10. Ein solches Verfahren verwirklicht die oben beschriebenen Vorteile, und sämtliche mit Bezug auf die Vorrichtung beschriebenen Ausführungsformen und damit verbundenen Vorteile treffen in verfahrensmäßiger Entsprechung zu und werden hier nicht noch einmal wiederholt.

Die Erfindung ist nachfolgend anhand mehrerer Ausführungsbeispiele mit Bezug auf die beiliegenden Figuren näher erläutert.
Fig. 1 zeigt eine schematische Darstellung eines Messplatzes mit einer Vorrichtung zur Fahrwerksvermessung eines Kraftfahrzeugs und mit an Rädern eines zu vermessenden Kraftfahrzeugs angebrachten Messtargets gemäß einem Ausführungsbeispiel der Erfindung;
Fig. 2 zeigt eine schematische Darstellung des Messplatzes aus Fig. 1 mit einer detaillierteren Ansicht der Vorrichtung zur Fahrwerksvermessung;
Fig. 3 zeigt eine schematische Darstellung von drei Bildaufnahmeoberflächenbereichen einer Bildaufnahmeeinheit der Vorrichtung zur Fahrwerksvermessung aus Fig. 1; und
Fig. 4 zeigt eine schematische Darstellung eines Messplatzes mit einer Vorrichtung zur Fahrwerksvermessung eines Kraftfahrzeugs und mit an Rädern eines zu vermessenden Kraftfahrzeugs angebrachten Messtargets gemäß einem weiteren Ausführungsbeispiel der Erfindung.

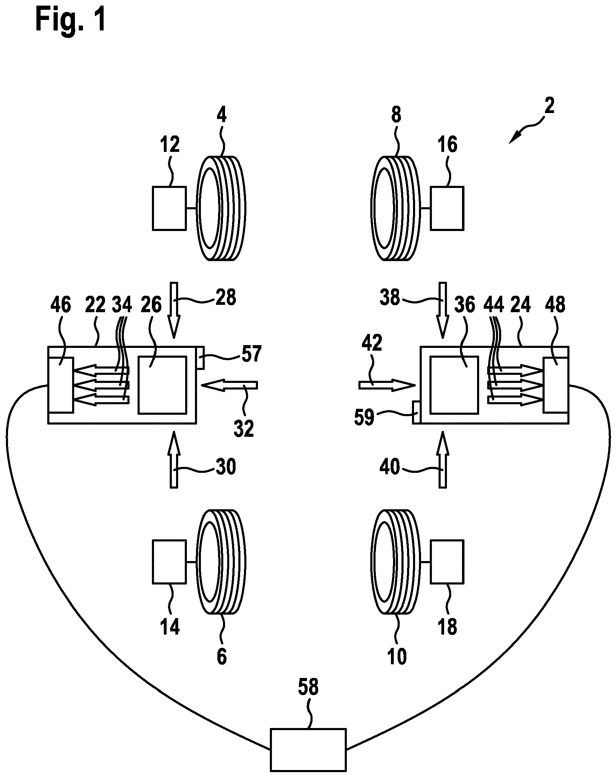

In der Fig. 1 ist ein Messplatz 2 mit einer Vorrichtung zur Fahrwerksvermessung eines Kraftfahrzeugs schematisch dargestellt. Aus Gründen der Übersichtlichkeit sind in Fig. 1 von dem Kraftfahrzeug lediglich die vier Räder 4, 6, 8, 10 gezeigt. Die Vorrichtung zur Fahrwerksvermessung besteht aus einer linken und einer rechten Messeinheit 22, 24, die einander bezogen auf die nicht dargestellte Längsachse des Kraftfahrzeugs gegenüberliegen. Der in Fig. 1 gezeigte Messplatz ist im Wesentlichen symmetrisch zu der Längsachse des Kraftfahrzeugs, weshalb der Aufbau zunächst beispielhaft bezogen auf die linke Kraftfahrzeugseite beschrieben wird.

In dem in Fig. 1 dargestellten Beispiel ist die linke Messeinheit 22 mittig zwischen dem linken Kraftfahrzeugvorderrad 4 und dem linken Kraftfahrzeughinterrad 6 auf einer linken Seite des Kraftfahrzeugs angeordnet. Die linke Messeinrichtung 22 beinhaltet eine linke optische Einrichtung 26 sowie eine linke Bildaufnahmeeinheit 46. Des Weiteren befinden sich auf der linken Kraftfahrzeugseite an dem Vorderrad 4 ein vorderes linkes Messtarget 12 und an dem Hinterrad 6 ein hinteres linkes Messtarget 14. Die Messtargets 12, 14 sind auf Höhe der Mittelachsen der jeweiligen Kraftfahrzeugräder 4, 6 über einen Adapter an den Kraftfahrzeugrädern 4, 6 derart angebracht, dass sie in axialer Richtung nach links hervorstehen und im Blickfeld der linken Messeinheit 22 liegen. An der linken Messeinheit 22 befindet sich ferner ein exemplarisch oben an der rechten Seite der Messeinheit 22 angebrachtes linkes Referenztarget 57. Bei einem solchen Referenztarget 57 kann es sich beispielsweise um eine einzelne LED, die an einer bekannten Position an der Messeinheit 22, 24 angebracht ist oder um zwei oder mehr in einer Reihe befindliche LEDs handeln, wobei die LEDs in einer bekannten Position zueinander angeordnet sind. Das Referenztarget 57 kann auch mehrere Lichtpunkte, insbesondere LEDs, in einer Fläche mit jeweils vorbestimmten Abständen zueinander oder in unterschiedlichen Flächen und Ebenen liegende Lichtpunkte, insbesondere LEDs, umfassen.

Die linke optische Einrichtung 26 ist in einem rechten Bereich der Messeinheit 22 und mittig zwischen dem vorderen linken Messtarget 12 und dem hinteren linken Messtarget 14 angeordnet. Links hinter ihr ist die Bildaufnahmeeinheit 46 angeordnet.

Die in Fig. 1 dargestellte Positionierung der Messeinheiten 22, 24 zwischen den jeweiligen Messtargets 12, 14, 16, 18 ist lediglich beispielhaft. Die Messeinheiten 22, 24 können an der linken und rechten Seite des Kraftfahrzeugs oder vor und hinter dem Kraftfahrzeug an jeder Position angeordnet sein, von der aus die Messtargets 12, 14, 16, 18 an den Kraftfahrzeugrädern 4, 6, 8, 10 der jeweiligen Kraftfahrzeugseite sichtbar sind.

Des Weiteren sind in der Fig. 1 durch Pfeile dargestellte optische Lichtwege gezeigt. Ein Lichtweg 28 verläuft von dem vorderen linken Messtarget 12 zu der linken optischen Einrichtung 26, und ein Lichtweg 30 verläuft von dem hinteren linken Messtarget 14 zu der linken optischen Einrichtung 26. Ferner ist ein optischer Lichtweg 32 gezeigt, der von einem an der gegenüberliegenden rechten Messeinheit 24 befestigten Referenztarget 59 in Richtung der linken optischen Einrichtung 26 verläuft. Die linke optische Einrichtung 26 lenkt die Lichtwege 28, 30 und den Lichtweg 32 zu einem gemeinsamen Lichtweg 34, der in Fig. 1 in Form von drei Pfeilen dargestellt ist, der auf die linke Bildaufnahmeeinheit 46 auftrifft. Dadurch werden Bilder der Messtargets 12, 14 sowie des Referenztargets 59 der gegenüberliegenden Messeinheit 24 auf der Bildaufnahmeoberfläche der linken Bildaufnahmeeinheit 46 abgebildet.

Auf der rechten Seite des Messplatzes 2 befinden sich, auf symmetrische Weise zu der beschriebenen linken Seite des Messplatzes 2 angeordnet, eine rechte Messeinheit 24, die eine rechte optische Einrichtung 36, eine rechte Bildaufnahmeeinheit 48 und ein rechtes Referenztarget 59 aufweist, und zwei jeweils an den rechten Kraftfahrzeugrädern 8, 10 angeordnete Messtargets 16, 18. Entsprechend der beschriebenen linken Messplatzseite sind auf die rechte optische Einrichtung 36 von den rechten Mess- und Referenztargets 16, 18, 57 kommende Lichtwege 38, 40, 42 gerichtet, die durch die rechte optische Einrichtung 36 als gemeinsamer Lichtweg 44 auf die Bildaufnahmeoberfläche der rechten Bildaufnahmeeinheit 48 gelenkt werden.

Fig. 1 zeigt des Weiteren eine Auswerteeinrichtung 58, die mit der linken Bildaufnahmeeinheit 46 und der rechten Bildaufnahmeeinheit 48 über ein Kabel verbunden ist.

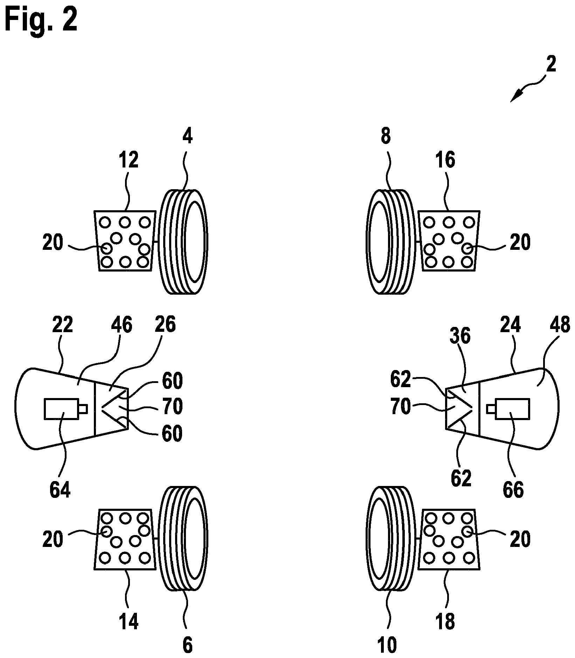

Fig. 2 zeigt einen Messplatz 2 gemäß Fig. 1, wobei die linke und rechte optische Einrichtung 26, 36 der jeweiligen Messeinheit 22, 24 sowie die Messtargets 12, 14, 16, 18 detaillierter dargestellt sind.

Im Unterschied zu Fig. 1 sind in der Fig. 2, aus Vereinfachungsgründen, die Auswerteeinrichtung 58, die Referenztargets 57, 59 und die von den Mess- und Referenztargets auf der rechten und linken optischen Einrichtung 26, 36 eintreffenden optischen Lichtwege 28, 30, 32, 38, 40, 42 nicht gezeigt.

In Fig. 2 sind die Messtargets 12, 14, 16, 18 vergrößert dargestellt. Jedes Messtarget 12, 14, 16, 18 besteht aus einer im Wesentlichen quadratischen Platte, deren horizontale Mittellinie parallel zu der jeweiligen Fahrzeugradachse ist. Auf den Messtargets 12, 14, 16, 18 befinden sich in einem bestimmten Muster angeordnete optische Targetmerkmale 20. Die Targetmerkmale 20 in Fig. 2 sind kreisförmig ausgebildet. Auf den in Fig. 2 dargestellten Messtargets 12, 14, 16, 18 sind exemplarisch zehn solche Targetmerkmale 20 dargestellt, wobei das Muster, in dem die Targetmerkmale 20 angeordnet sind, auf jedem der Messtargets 12, 14, 16, 18 gleich ist. Die Targetmerkmale 20 sind symmetrisch zu einer vertikalen Mittellinie der Messtargets 12, 14, 16, 18 angeordnet. Dabei handelt es sich lediglich um eine exemplarische Targetmerkmalanordnung, wobei beliebige Anordnungen, Anzahl und Größen der Targetmerkmale 20 denkbar sind. Fig. 2 zeigt darüber hinaus, dass die plattenförmigen Messtargets 12, 14, 16, 18 in einem Winkel von bspw. 30°zur Kraftfahrzeugaufstandsfläche angeordnet sind.

In der linken und der rechten Messeinheit 22, 24 der Fig. 2 sind jeweils eine Bildaufnahmeeinheit 46, 48 und eine optische Einrichtung 26, 36 angeordnet, wobei die Bildaufnahmeeinheit 46, 48 jeweils eine Kamera 64, 66 umfasst. Die optischen Einrichtungen 26, 36 beinhalten jeweils einen optischen Strahlenteiler 70, der aus einer Spiegelanordnung 60, 62 gebildet ist. Die Spiegelanordnungen 60, 62 umfassen dabei zwei Spiegel, die exemplarisch in einem rechten Winkel zueinander stehen, wobei der vordere der beiden Spiegel in einem Winkel von 45° zur Vertikalen in Fahrzeugquerrichtung und der hintere der beiden Spiegel einer Spiegelanordnung 60, 62 in einem Winkel von -45° zur Vertikalen in Fahrzeugquerrichtung steht. In dem Ausführungsbeispiel in Fig. 2 weisen die Spiegel einen geringen Abstand zueinander auf und berühren sich nicht. Die Kameras 64, 66 sind auf die Spiegelanordnungen 60, 62 der jeweiligen Messeinrichtungen 22, 24 ausgerichtet, so dass die von den Spiegelanordnungen 60, 62 von vorne und von hinten zur Seite hin umgelenkten Lichtwege jeweils auf den Kameras 64, 66 auftreffen und dort aufgenommen werden können.

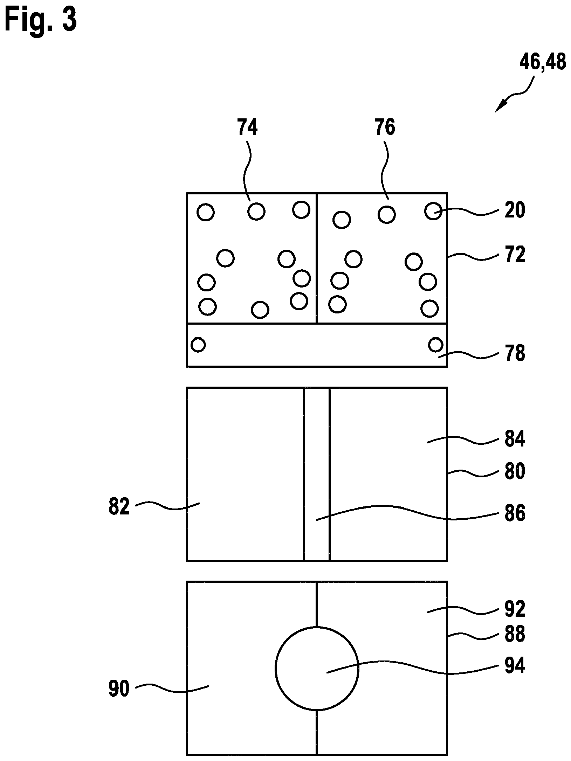

In Fig. 3 sind drei Beispiele für eine in den Bildaufnahmeeinheiten 46, 48 befindliche Bildaufnahmeoberfläche 72 gezeigt.

Die obere Bildaufnahmeoberfläche 72 weist eine rechteckige Form auf, die in drei rechteckige Bildbereiche 74, 76, 78 unterteilt ist. Der erste und zweite Bildbereich 74, 76 teilen einen oberen Bereich der Bildaufnahmeoberfläche 72 an der vertikalen Mittellinie in zwei gleichgroße Bildbereiche 74, 76 und nehmen etwa Dreiviertel der gesamten Bildaufnahmeoberfläche 72 ein. Der dritte Bildbereich 78 umfasst einen horizontalen unteren Längsstreifen von etwa einem Viertel der Bildaufnahmeoberfläche 72.

Exemplarisch sind auf den Bildbereichen 74, 76, 78 Abbildungen der Targetmerkmale 20 der Mess- und Referenztargets 12, 14, 16, 18, 57, 59 gezeigt, wobei die Abbildungen auf dem ersten Bildbereich 74 den zehn Targetmerkmalen 20 des vorderen Messtargets 12, 16 und die Abbildungen auf dem zweiten Bildbereich 76 den zehn Targetmerkmalen 20 eines zugehörigen hinteren Messtargets 14, 18 entsprechen. Auf dem dritten Bildbereich 78 ist ein Bild des Referenztargets 57, 59 abgebildet, wobei am linken und rechten Rand des dritten Bildbereichs 78 exemplarisch jeweils ein Targetmerkmal 20 des Referenztargets 57, 59 dargestellt ist.

In den weiteren in Fig. 3 dargestellten Ausführungsbeispielen von Bildaufnahmeoberflächen 60, 88 sind die Abbildungen der Targetmerkmale 20 der Einfachheit halber nicht dargestellt.

Die Bildaufnahmeoberfläche 80 der Fig.3 ist vertikal in drei Bildbereiche 82, 84, 86 unterteilt. Der erste und der zweite Bildbereich 82, 84 sind gleichgroß und befinden sich jeweils am äußeren rechten Rand und äußeren linken Rand der Bildaufnahmeoberfläche 80. Zwischen dem ersten und zweiten Bildbereich 82, 84 befindet sich der dritte Bildbereich 86, der weniger als ein Viertel der Bildaufnahmeoberfläche 80 umfasst.

Des Weiteren zeigt Fig. 3 eine Bildaufnahmeoberfläche 88, die in drei Bildbereiche 90, 92, 94 unterteilt ist, wobei der dritte Bildbereich 94 kreisförmig ist, in der Mitte der Bildaufnahmeoberfläche 88 liegt. Der erste Bildbereich 90 bildet die linke Seite und der zweite Bildbereich 92 die rechte Seite der Bildaufnahmeoberfläche, wobei der erste und der zweite Bildbereich 90, 92 gleichgroß und symmetrisch zueinander sind.

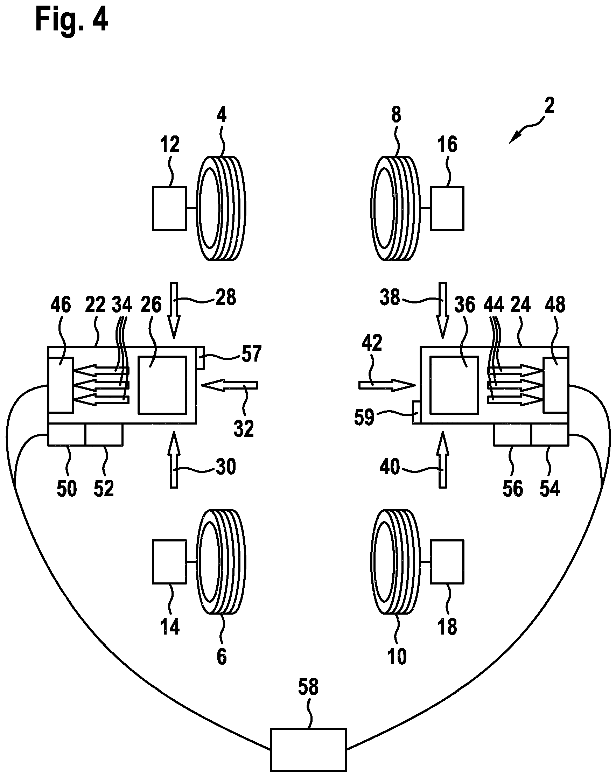

Fig. 4 zeigt alle Elemente der Fig. 1, wobei zusätzlich an den Messeinheiten 22 und 24 jeweils ein Neigungssensor und ein Bewegungssensor angeordnet ist. Der linke Neigungssensor 50 befindet sich im unteren linken Bereich der Messeinheit 22, und rechts danebenliegend ist der linke Bewegungssensor 52 angeordnet. Die Neigungs- und Bewegungssensoren 50, 50 jeder Messeinheit 22, 24 sind zusätzlich mit der Auswerteeinrichtung 58 verbunden.

Im Folgenden ist die Funktionsweise der Vorrichtung zur Fahrwerksvermessung eines Kraftfahrzeugs exemplarisch anhand der Vermessung der linken Kraftfahrzeugseite mit Hilfe der linken Messeinheit 22 erläutert.

Die optische Einrichtung 26 richtet die Lichtwege von den Mess- und Referenztargets 12, 14, 59 auf die Bildaufnahmeeinheit 46. In dem in Fig. 1 und 2 gezeigten Ausführungsbeispiel wird der Lichtweg 28 von dem vorderen linken Messtarget 12 durch den oberen Spiegel der Spiegelanordnung 60 um einem Winkel von 90° in Richtung der Bildaufnahmeeinheit 46 umgelenkt, und der Lichtweg 30 von dem hinteren linken Messtarget 14 wird durch den hinteren Spiegel der Spiegelanordnung 60 um einem Winkel von 90° in Richtung der Bildaufnahmeeinheit 46 umgelenkt. Der Lichtweg von dem Referenztarget 59 wird in der beispielhaften Spiegelanordnung 60 in Fig. 2 nicht umgelenkt. Die Lichtwege 28, 30, 32 treffen auf die Bildaufnahmeeinheit 46 auf, wobei, gemäß Fig. 3, der Lichtweg 28 von dem vorderen linken Messtarget 12 ein Bild auf dem ersten Bildbereich 74, der Lichtweg 30 des hinteren linken Messtargets 14 ein Bild auf dem zweiten Bildbereich 76 und der Lichtweg 32 des Referenztargets 59 ein Bild auf dem dritten Bildbereich 78 der Bildaufnahmeeinheit 46 erzeugt. Die Form der Bereiche 74, 76, 78 hängt von der Spiegelanordnung 60 ab.

Die von der Bildaufnahmeeinheit 46 erfassten Bilder werden anschließend zur Berechnung der Ausrichtung der Räder 4, 6 von der Auswerteeinrichtung 58 ausgewertet. Auf die gleiche Weise werden zur Berechnung der Ausrichtung der Räder der rechten Kraftfahrzeugseite die Bilder der Mess- und Referenztargets 16, 18, 57 von der rechten Bildaufnahmeeinheit 48 erfasst und von der Auswerteeinrichtung 58 analysiert.

Zur Auswertung vergleicht die Auswerteeinrichtung 58 die Bildbereiche 74, 76, 78 der Bildaufnahmeeinheiten 46, 48 mit Referenzdaten. Diese Referenzdaten umfassen Bilder der Mess- und Referenztargets, die in einem bekannten Winkel und einem bekannten Anstand aufgenommen wurden und in der Auswerteeinrichtung hinterlegt sind.

Die Ausrichtung der Räder 4, 6 der linken Seite wird durch die Auswerteeinrichtung 58 ermittelt, indem die Bilder der linken Messtargets 12, 14 und von deren optischen Targetmerkmalen 20 auf dem ersten und zweiten Bildbereich 74, 76 mit Referenzbildern der Messtargets 12, 14 verglichen werden. Auf dieselbe Weise wird die Ausrichtung der rechten Messtargets 16, 18 relativ zu der rechten Messeinheit 24 bestimmt.

Um die Position der linken Messtargets 12, 14 relativ zu den rechten Messtargets 16, 18 ermitteln zu können, kann die Position und Orientierung der linken Messeinheit 22 relativ zur rechten Messeinheit 24 ermittelt werden. Dazu dienen die linken und rechten Referenztargets 57, 59, wobei mittels der Auswerteeinheit 58 die relative Position der Referenztargets 57, 59 zueinander ermittelt wird. Diese wird durch die Auswertung der Bilder der Referenztargets 57, 59 auf den Bildbereichen 78, 86, 94 der Bildaufnahmeeinheit 46, 48 bestimmt.

Die Ermittlung der Ausrichtung der Messeinheiten 22, 24 zueinander kann auf verschiedene Weisen durchgeführt werden, die von der Art des jeweiligen Referenztargets 57, 59 abhängen.

Das Referenztarget 57, 59 kann beispielsweise punktförmig ausgebildet sein, d.h. aus einer einzelnen LED bestehen, was erfordert, dass zur Bestimmung der Relativposition der Messeinheiten 22, 24 zueinander, der Abstand der beiden Messeinheiten 22, 24 in Fahrzeugquerrichtung zueinander bekannt und in der Auswerteeinrichtung 58 hinterlegt ist, und dass an jeder der Messeinheiten 22, 24 ein Neigungssensor 50, 54 vorhanden ist, der mit der Auswerteeinrichtung 58 verbunden ist und die Neigung der jeweiligen Messeinheit 22, 24 bestimmt, wie dies mit Bezug auf die Bezugszeichen 50 und 54 in Figur 4 gezeigt ist.

Aus der Abbildung des aus einer LED bestehenden Referenztargets 57, 59 auf dem zugehörigen Bildbereich 78, 86, 94 der Bildaufnahmeoberfläche kann anschließend von der Auswerteeinrichtung die Ausrichtung der Messeinheiten 22, 24 in Fahrzeuglängsrichtung relativ zueinander bestimmt werden.

Besteht das Referenztarget 57, 59 aus einem zweidimensionalen Target, also aus einer Anzahl von Lichtpunkten, insbesondere LEDs, in einer Linie, kann aus dem Vergleich des Bildes des 2D-Targets mit einem Referenzbild die Position der Messeinheiten zueinander, also der Abstand und die winkelmäßige Verschiebung der Messeinheiten berechnet werden. Dies erfordert, dass an jeder der Messeinheiten 22, 24 ein Neigungssensor 50, 54, vorhanden ist, der mit der Auswerteeinrichtung 58 verbunden ist und die Neigung der jeweiligen Messeinheit 22, 24 bestimmt, wie dies mit Bezug auf die Bezugszeichen 50 und 54 in Figur 4 gezeigt ist. Der Abstand der beiden Messeinheiten 22, 24 in Fahrzeugquerrichtung zueinander muss hierfür nicht bekannt sein.

Ein dreidimensionales Target mit einer bekannten Anordnung von optischen Targetmerkmalen 20 erfordert zur Bestimmung der Position der Messeinheiten 22, 24 relativ zueinander weder einen Neigungssensor 50, 54 noch die Kenntnis des Abstands der Messeinheiten 22, 24 in Fahrzeugquerrichtung.

Die Berechnung der Ausrichtung der Messeinheiten 22, 24 relativ zueinander kann fortlaufend aktualisiert werden, was auf verschiedene Weisen durchführbar ist.

Wie in Fig. 4 dargestellt, kann hierfür zusätzlich ein Bewegungssensor 52, 56 in jeder der Messeinheiten 22, 24 vorgesehen sein, der eine Bewegung der jeweiligen Messeinheiten 22, 24 detektiert und daraufhin eine Aufnahme von Bildern der Messtargets 12, 14, 16, 18 und der Referenztargets 57, 59 auslöst, die anschließend durch die Auswerteeinrichtung 58 ausgewertet werden

Eine periodische oder kontinuierliche Aktualisierung der Messdaten ist ebenfalls möglich. Dabei wird in vorbestimmten zeitlichen Abständen eine Bildaufnahme der Mess- und Referenztargets 12, 14, 16, 18, 57, 59 durchgeführt, und diese Daten werden von der Auswerteeinrichtung 58 ausgewertet.

Ferner können die optischen Daten der Referenztargets 57, 59 kontinuierlich überwacht werden, um, sobald eine Änderung in den Daten detektiert wird, die Position der Messeinheiten 22, 24 relativ zueinander neu zu berechnen.

## Patentansprüche

1. Vorrichtung zur Fahrwerksvermessung eines Kraftfahrzeugs, aufweisend:
eine linke Messeinheit (22) zur Positionierung auf einer linken Kraftfahrzeugseite derart, dass ein Messtarget (12) an einem linken Vorderrad (4) und ein Messtarget (14) an einem linken Hinterrad (6) des Kraftfahrzeugs von der linken Messeinheit (22) aus erfassbar sind;
eine rechte Messeinheit (24) zur Positionierung auf einer rechten Fahrzeugseite derart, dass ein Messtarget (16) an einem rechten Vorderrad (8) und ein Messtarget (18) an einem rechten Hinterrad (10) des Kraftfahrzeugs von der rechten Messeinheit (24) aus erfassbar sind; und
eine Auswerteeinrichtung (58);
wobei jede der beiden Messeinheiten (22, 24) das Folgende umfasst:
ein von der jeweils anderen Messeinheit (22, 24) sichtbares Referenztarget (57, 59);
eine Bildaufnahmeeinheit (46, 48) zum gleichzeitigen Erfassen eines Bildes des Messtargets (12, 16) an dem Vorderrad (4, 8), eines Bildes des Messtargets (14, 18) an dem Hinterrad (6, 10) und eines Bildes des Referenztargets (57, 59) der gegenüberliegenden Messeinheit (22, 24), wobei die Bildaufnahmeeinheit (46, 48) eine Bildaufnahmeoberfläche (72, 80, 88) mit einem ersten Bildbereich (74, 82, 90), mit einem zweiten Bildbereich (76, 84, 92) und mit einem dritten Bildbereich (78, 86, 94) aufweist; und
eine optische Einrichtung (26, 36), die dazu angeordnet und ausgebildet ist, das Bild des Messtargets (12, 16) am Vorderrad (4, 8) auf den ersten Bildbereich (74, 82, 90) zu lenken, das Bild des Messtargets (14, 18) am Hinterrad (6, 10) auf den zweiten Bildbereich (76, 84, 92) zu lenken, und das Bild des Referenztargets (57, 59) der gegenüberliegenden Messeinheit (22, 24) auf den dritten Bildbereich (78, 86, 94) zu lenken; und
wobei die Auswerteeinrichtung (58) dazu ausgebildet ist, durch Vergleichen mit Referenzbildern, die jeweils in einem bekannten Winkel und einem bekannten Abstand aufgenommen und in der Auswerteeinrichtung (58) hinterlegt worden sind, aus den Bildern der Messtargets (12, 16) der vorderen Räder (4, 8), der Messtargets (14, 18) der hinteren Räder (6, 10) und der Referenztargets (57, 59) die relative Position der Referenztargets (57, 59) zu ermitteln und Fahrzeuggeometriedaten zu ermitteln.

2. Vorrichtung nach Anspruch 1,
wobei die Referenztargets (57, 59) jeweils punktförmig, insbesondere in Form einer LED, ausgebildet sind,
wobei jede Messeinheit (22, 24) über einen Neigungssensor (50, 54) verfügt, und
wobei die Auswerteeinrichtung (58) so ausgebildet ist, dass sie zum Ermitteln der Fahrzeuggeometriedaten die Neigung der beiden Messeinheiten (22, 24) und den bekannten Abstand der Messeinheiten (22, 24) in Fahrzeugquerrichtung heranzieht.

3. Vorrichtung nach einem der Ansprüche 1 oder 2,
wobei die Referenztargets (57, 59) jeweils als wenigstens zwei in einer Linie angeordnete Lichtpunkte, insbesondere LEDs, mit vorbestimmtem Abstand, ausgebildet sind, und
wobei jede Messeinheit (22, 24) über einen Neigungssensor (50, 54) verfügt, und wobei die Auswerteeinrichtung (58) so ausgebildet ist, dass sie aus den von den Bildaufnahmeeinheiten (46, 48) erfassten Bildern der Referenztargets (57, 59) unter Vergleich mit Referenzbildern der Referenztargets (57, 59) den Abstand und die winkelmäßige Verschiebung der Messeinheiten (22, 24) zueinander bestimmt, und den Abstand in Fahrzeugquerrichtung sowie die winkelmäßige Verschiebung der Messeinheiten (22, 24) und die Neigung der beiden Messeinheiten (22, 24) beim Ermitteln der Fahrzeuggeometriedaten heranzieht.

4. Vorrichtung nach Anspruch 1,
wobei die Referenztargets (57, 59) als mehrere Lichtpunkte, insbesondere LEDs, in einer Fläche mit jeweils vorbestimmten Abständen zueinander oder als in unterschiedlichen Flächen und Ebenen vorliegende Lichtpunkte, insbesondere LEDs, ausgebildet sind, und
wobei die Auswerteeinrichtung (58) dazu ausgebildet ist, dass sie aus den auf den Bildaufnahmeeinheiten (46, 48) empfangenen Bildern der Referenztargets (57, 59) unter Vergleich mit Referenzbildern der Referenztargets (57, 59) den Abstand und die winkelmäßige Verschiebung der Messeinheiten (22, 24) zueinander sowie die Neigung der beiden Messeinheiten (22, 24) bestimmt, und den Abstand und die winkelmäßige Verschiebung der Messeinheiten (22, 24) sowie die Neigung der beiden Messeinheiten (22, 24) beim Ermitteln der Fahrzeuggeometriedaten heranzieht.

5. Vorrichtung nach einem der vorhergehenden Ansprüche, wobei an wenigstens einer der Messeinheiten (22, 24) ein Bewegungssensor (52, 56) vorgesehen ist, der, wenn er eine Bewegung wenigstens einer der Messeinheiten (22, 24) detektiert, eine Bildaufnahme der Mess- und Referenztargets (12, 14, 16, 18, 57, 59) durch die Bildaufnahmeeinheiten (46, 48) auslöst.

6. Vorrichtung nach einem der vorhergehenden Ansprüche, wobei zusätzlich ein Bewegungssensor (52, 56) vorgesehen ist, der, wenn er eine Bewegung wenigstens eines der Mess- oder Referenztargets (12, 14, 16, 18, 57, 59) oder eine Bewegung des Kraftfahrzeugs detektiert, eine Bildaufnahme der Mess- und Referenztargets (12, 14, 16, 18, 57, 59) durch die Bildaufnahmeeinheiten (46, 48) auslöst.

7. Vorrichtung nach einem der vorhergehenden Ansprüche, wobei die Bildaufnahmeeinheiten (46, 48) sowie die Auswerteeinheit (58) für eine periodische oder kontinuierliche Bildaufnahme der Mess- und Referenztargets (12, 14, 16, 18, 57, 59) ausgebildet sind.

8. Vorrichtung nach einem der vorhergehenden Ansprüche, wobei es sich bei der optischen Einrichtung (26, 36) um ein Prisma, um einen Strahlteiler, um einen Spiegel, um eine Linse oder einer Kombination dieser Elemente handelt.

9. Messplatz mit einem darauf stehenden Kraftfahrzeug, an dessen Rädern (4, 6, 8, 10) Messtargets (12, 14, 16, 18) angebracht sind, und mit einer Vorrichtung zur Fahrwerksvermessung eines Kraftfahrzeugs nach einem der vorhergehenden Ansprüche,
wobei die linke Messeinheit (22) derart auf der linken Kraftfahrzeugseite positioniert ist, dass das Messtarget (12) an dem linken Vorderrad (4) und das Messtarget (14) an dem linken Hinterrad (6) des Kraftfahrzeugs von der linken Messeinheit (22) aus erfassbar sind; und
wobei die rechte Messeinheit (24) derart auf der rechten Fahrzeugseite positioniert ist, dass das Messtarget (16) an dem rechten Vorderrad (8) und das Messtarget (18) an dem rechten Hinterrad (10) des Kraftfahrzeugs von der rechten Messeinheit (24) aus erfassbar sind.

10. Verfahren zur Fahrwerksvermessung eines Kraftfahrzeugs, aufweisend:
Anbringen von Messtargets (12, 14, 16, 18) an den Rädern (4, 6, 8, 10) eines Kraftfahrzeugs;
Positionieren einer linken Messeinheit (22) auf der linken Kraftfahrzeugseite derart, dass das Messtarget (12) an dem linken Vorderrad (4) und das Messtarget (14) an dem linken Hinterrad (6) des Kraftfahrzeugs von der linken Messeinheit (22) aus erfassbar sind, wobei die linke Messeinheit (22) ein von einer rechten Messeinheit (24) sichtbares Referenztarget (57), eine optische Einrichtung (26) und eine Bildaufnahmeeinheit (46) aufweist;
Positionieren der rechten Messeinheit (24) auf der rechten Kraftfahrzeugseite derart, dass das Messtarget (16) an dem rechten Vorderrad (8) und das Messtarget (18) an dem rechten Hinterrad (10) des Kraftfahrzeugs von der rechten Messeinheit (24) aus erfassbar sind, wobei die rechte Messeinheit (24) ein von der linken Messeinheit (22) sichtbares Referenztarget (59), eine optische Einrichtung (36) und eine Bildaufnahmeeinheit (48) aufweist;
Erzeugen, durch die optische Einrichtung (26) der linken Messeinheit (22), eines Bildes des Messtargets (12) des linken Vorderrads (4) auf einem ersten Bildbereich (74, 82, 90) einer Bildaufnahmeoberfläche (72, 80, 88) der Bildaufnahmeeinheit (46) der linken Messeinheit (22), eines Bildes des Messtargets (14) des linken Hinterrads (6) auf einem zweiten Bildbereich (76, 84, 92) dieser Bildaufnahmeoberfläche (72, 80, 88) und eines Bildes des Referenztargets (59) der rechten Messeinheit (24) auf einem dritten Bildbereich (78, 86, 94) dieser Bildaufnahmeoberfläche (72, 80, 88), und gleichzeitiges Erfassen dieser Bilder durch die Bildaufnahmeeinheit (46) der linken Messeinheit (22); Erzeugen, durch die optische Einrichtung (36) der rechten Messeinheit (24), eines Bildes des Messtargets (16) des rechten Vorderrads (8) auf einem ersten Bildbereich (74, 82, 90) einer Bildaufnahmeoberfläche (72, 80, 88) der Bildaufnahmeeinheit (48) der rechten Messeinheit (24), eines Bildes des Messtargets (18) des rechten Hinterrads (10) auf einem zweiten Bildbereich (76, 84, 92) dieser Bildaufnahmeoberfläche (72, 80, 88) und eines Bildes des Referenztargets (57) der linken Messeinheit (22) auf einem dritten Bildbereich (78, 86, 94) dieser Bildaufnahmeoberfläche (72, 80, 88), und gleichzeitiges Erfassen dieser Bilder durch die Bildaufnahmeeinheit (48) der rechten Messeinheit (24); Ermitteln der relativen Position der Referenztargets (57, 59) und der Fahrzeuggeometriedaten durch eine Auswerteeinrichtung (58) aus den Bildern der Messtargets (12, 16) der vorderen Räder (4, 8) und der Messtargets (14, 18) der hinteren Räder (6, 10) und der Referenztargets (57, 59) durch Vergleichen mit Referenzbildern, die jeweils in einem bekannten Winkel und einem bekannten Abstand aufgenommen und in der Auswerteeinrichtung (58) hinterlegt worden sind.

## Claims

1. An apparatus for wheel alignment measurement of a motor vehicle, com - prising:
a left measuring unit (22) to be positioned on a left side of the motor vehicle in such a way that a measurement target (12) on a left front wheel (4) and a measurement target (14) on a left rear wheel (6) of the motor vehicle can be sensed from the left measuring unit (22);
a right measuring unit (24) to be positioned on a right side of the motor vehicle in such a way that a measurement target (16) on a right front wheel (8) and a measurement target (18) on a right rear wheel (10) of the motor vehicle can be sensed from the right measuring unit (24); and
an evaluation device (58);
wherein each of the two measuring units (22, 24) comprises:
a reference target (57, 59) that is visible from the respective other measur - ing unit (22, 24);
an image recording unit (46, 48) for simultaneously sensing an image of the measurement target (12, 16) on the front wheel (4, 8), an image of the measurement target (14, 18) on the rear wheel (6, 10), and an image of the reference target (57, 59) of the opposite measuring unit (22, 24), wherein the image recording unit (46, 48) comprises an image recording surface (72, 80, 88) having a first image region (74, 82, 90), a second image region (76, 84, 92) and a third image region (78, 86, 94); and
an optical device (26, 36) disposed and configured to direct the image of the measurement target (12, 16) on the front wheel (4, 8) to the first image re - gion (74, 82, 90), the image of the measurement target (14, 18) on the rear wheel (6, 10) to the second image region (76, 84, 92), and the image of the reference target (57, 59) of the opposite measuring unit (22, 24) to the third image region (78, 86, 94); and
wherein the evaluation device (58) is configured to identify the relative posi - tion of the reference targets (57, 59) and to identify vehicle geometry data from the images of the measurement targets (12, 16) of the front wheels (4, 8), of the measurement targets (14, 18) of the rear wheels (6, 10) and of the reference targets (57, 59) by comparison with reference images that have each been recorded at a known angle and a known distance and are stored in the evaluation device (58).

2. The apparatus according to claim 1,
wherein the reference targets (57, 59) are each configured in point-like fash - ion, in particular in the form of an LED,
wherein each measuring unit (22, 24) has an inclination sensor (50, 54), and
wherein the evaluation device (54) is configured to identify the vehicle geo - metry data on the basis of the inclination of the two measuring units (22, 24) and the known spacing of the measuring units (22, 24) in the transverse vehicle direction.

3. The apparatus according to any of claims 1 or 2,
wherein the reference targets (57, 59) are each configured as at least two light spots, in particular LEDs, disposed along a line at a predetermined spacing, and
wherein each measuring unit (22, 24) has an inclination sensor (50, 54); and
wherein the evaluation device (58) is configured to determine the spacing and the angular displacement of the measuring units (22, 24) with respect to one another on the basis of the images of the reference targets (57, 59) sensed by the image recording units (46, 48) and comparison with reference images of the reference targets (57, 59), and to utilize the spacing in the transverse vehicle direction and the angular displacement of the meas - uring units (22, 24) as well as the inclination of the two measuring units (22, 24) in identifying the vehicle geometry data.

4. The apparatus according to claim 1,
wherein the reference targets (57, 59) are configured as multiple light spots, in particular LEDs, disposed in an area at predetermined spacings from one another, or as light spots, in particular LEDs, that are present in different areas and planes, and
wherein the evaluation device (58) is configured to determine the spacing and the angular displacement of the measuring units (22, 24) with respect to one another as well as the inclination of the two measuring units (22, 24) on the basis of the images of the references targets (57, 59) received by the image recording units (46, 48) and by comparison with reference images of the reference targets (57, 59), and to utilize the spacing and the angular dis - placement of the measuring units (22, 24) as well as the inclination of the two measuring units (22, 24) in identifying the vehicle geometry data.

5. The apparatus according to any of the preceding claims,
wherein at least one of the measuring units (22, 24) is provided with a mo - tion sensor (52, 56) which, upon detecting a movement of at least one of the measuring units (22, 24), triggers imaging of the measurement and ref - erence targets (12, 14, 16, 18, 57, 59) by the image recording units (46, 48).

6. The apparatus according to any of the preceding claims,
wherein there is provided at least one motion sensor (52, 56) in addition which, upon detecting a movement of at least one of the measurement or reference targets (12, 14, 16, 18, 57, 59) or a movement of the motor vehicle, triggers imaging of the measurement and reference targets (12, 14, 16, 18, 57, 59) by the image recording units (46, 48).

7. The apparatus according to any of the preceding claims,
wherein the image recording units (46, 48) and the evaluation unit (58) are configured for periodic or continuous imaging of the measurement and ref - erence targets (12, 14, 16, 18, 57, 59).

8. The apparatus according to any of the preceding claims,
wherein the optical device (26, 36) is a prism, a beam splitter, a mirror, a lens or a combination of these elements.

9. A measuring station with a motor vehicle standing thereon, which has meas - urement targets (12, 14, 16, 18) mounted on the wheels (4, 6, 8, 10) thereof, and with an apparatus for wheel alignment measurement of a motor vehicle according to any of the preceding claims,
wherein the left measuring unit (22) is positioned on the left side of the mo - tor vehicle in such a way that the measurement target (12) on the left front wheel (4) and the measurement target (14) on the left rear wheel (6) of the motor vehicle can be sensed from the left measuring unit (22);
wherein the right measuring unit (24) is positioned on the right side of the motor vehicle in such a way that the measurement target (16) on the right front wheel (8) and the measurement target (18) on the right rear wheel (10) of the motor vehicle can be sensed from the right measuring unit (24).

10. A method for wheel alignment measurement of a motor vehicle, comprising:
mounting measurement targets (12, 14, 16, 18) on the wheels (4, 6, 8, 10) of a motor vehicle;
positioning a left measuring unit (22) on the left side of the motor vehicle in such a way that the measurement target (12) on the left front wheel (4) and the measurement target (14) on the left rear wheel (6) of the motor vehicle can be sensed from the left measuring unit (22), wherein the left measuring unit (22) has a reference target (57) that is visible from a right measuring unit (24), an optical device (26) and an image recording unit (46);
positioning the right measuring unit (24) on the right side of the motor vehicle in such a way that the measurement target (16) on the right front wheel (8) and the measurement target (18) on the right rear wheel (10) of the motor vehicle can be sensed from the right measuring unit (14), wherein the right measuring unit (24) has a reference target (59) that is visible from the left measuring unit (22), an optical device (36) and an image recording unit (48),
generating, by means of the optical device (26) of the left measuring unit (22), an image of the measurement target (12) of the left front wheel (4) in a first image region (74, 82, 90) of an image recording surface (72, 80, 88) of the image recording unit (46) of the left measuring unit (22), an image of the measurement target (14) of the left rear wheel (6) in a second image region (76, 84, 92) of said image recording surface (72, 80, 88), and an image of the reference target (59) of the right measuring unit (24) in a third image re - gion (78, 86, 94) of said image recording surface (72, 80, 88), and simultan - eously sensing said images by the image recording unit (46) of the left measuring unit (22);
generating, by means of the optical device (36) of the right measuring unit (24), an image of the measurement target (16) of the right front wheel (8) in a first image region (74, 82, 90) of an image recording surface (72, 80, 88) of the image recording unit (48) of the right measuring unit (24), an image of the measurement target (18) of the right rear wheel (10) in a second image region (76, 84, 92) of said image recording surface (72, 80, 88), and an im - age of the reference target (57) of the left measuring unit (22) in a third im - age region (78, 86, 94) of said image recording surface (72, 80, 88), and simultaneously sensing said images by the image recording unit (48) of the right measuring unit (24);
identifying the relative position of the reference targets (57, 59) and the vehicle geometry data by an evaluation device (58) on the basis of the im - ages of the measurement targets (12, 16) of the front wheels (4, 8) and the measurement targets (14, 18) of the rear wheels (6, 10) and the reference targets (57, 59) by comparison with reference images which have each been recorded at a known angle and a known distance and are stored in the evaluation device (58).

## Revendications

1. Dispositif de contrôle de la géométrie des trains roulants d'un véhicule automobile comprenant :
une unité de mesure de gauche (22) destinée à être placée sur un côté gauche du véhicule automobile de telle manière que l'unité de mesure de gauche (22) peut détecter une cible de mesure (12) sur la roue avant gauche (4) et une cible de mesure (14) sur la roue arrière gauche (6) du véhicule automobile ;
une unité de mesure de droite (24) destinée à être placée sur un côté droit du véhicule automobile de telle manière que l'unité de mesure de droite (24) peut détecter une cible de mesure (16) sur la roue avant droite (8) et une cible de mesure (18) sur la roue arrière droite (10) du véhicule automobile ; et
un dispositif d'évaluation (58) ;
**caractérisé en ce que** chacune des deux unités de mesure (22, 24) englobe les éléments suivants :
une cible de référence (57, 59) visible respectivement par l'autre unité de mesure (22, 24) ;
une unité d'enregistrement d'images (46, 48) qui détecte simultanément une image de la cible de mesure (12, 16) de la roue avant (4, 8), une image de la cible de mesure (14, 18) de la roue arrière (6, 10) et une image de la cible de référence (57, 59) de l'unité de mesure opposée (22, 24), l'unité d'enregistrement d'images (46, 48) présentant une surface d'enregistrement d'images (72, 80, 88) avec une première zone d'image (74, 82, 90), une deuxième zone d'image (76, 84, 92) et une troisième zone d'image (78, 86, 94) ; et
un dispositif optique (26, 36) qui est agencé et configuré pour diriger l'image de la cible de mesure (12, 16) de la roue avant (4, 8) vers la première zone d'image (74, 82, 90), l'image de la cible de mesure (14, 18) de la roue arrière (6, 10) vers la deuxième zone d'image (76, 84, 92) et l'image de la cible de référence (57, 59) de l'unité de mesure opposée (22, 24) vers la troisième zone d'image (78, 86, 94) ; et
le dispositif d'évaluation (58) étant par ailleurs réalisé pour déterminer la position relative des cibles de référence (57, 59) ainsi que les données de la géométrie du véhicule automobile à partir des images des cibles de mesure (12, 16) des roues avant (4, 8), des cibles de mesure (14, 18) des roues arrière (6, 10) et des cibles de référence (57, 59) par comparaison avec des images de référence qui ont été prises respectivement selon un angle connu et un écart connu et qui ont été enregistrées dans le dispositif d'évaluation (58).

2. Dispositif selon la revendication 1,
**caractérisé en ce que** les cibles de référence (57, 59) se présentent chacune en forme de points, en particulier sous la forme d'une LED,
**en ce que** chaque unité de mesure (22, 24) dispose d'un capteur d'inclinaison (50, 54), et
**en ce que** le dispositif d'évaluation (58) est réalisé de manière à utiliser l'inclinaison des deux unités de mesure (22, 24) et l'écart connu des unités de mesure (22, 24) dans la direction transversale du véhicule pour déterminer les données de la géométrie du véhicule automobile.

3. Dispositif selon l'une quelconque des revendication 1 ou 2,
**caractérisé en ce que** les cibles de référence (57, 59) sont chacune formées d'au moins deux points lumineux, en particulier des LED, agencés sur une ligne avec un écart prédéfini,
**en ce que** chaque unité de mesure (22, 24) dispose d'un capteur d'inclinaison (50, 54) et **en ce que** le dispositif d'évaluation (58) est réalisé de telle manière que, à partir des images des cibles de référence (57, 59) enregistrées par les unités d'enregistrement d'images (46, 48), il détermine l'écart et le déplacement angulaire des unités de mesure (22, 24) l'une par rapport à l'autre par comparaison avec les images de référence des cibles de référence (57, 59), et qu'il tient compte de l'écart dans la direction transversale du véhicule ainsi que du déplacement angulaire des unités de mesure (22, 24) et de l'inclinaison des deux unités de mesure (22, 24) pour déterminer les données de la géométrie du véhicule automobile.

4. Dispositif selon la revendication 1,
**caractérisé en ce que** les cibles de référence (57, 59) sont formées de plusieurs points lumineux, en particulier des LED, situés sur une surface avec des écarts prédéfinis les uns par rapport aux autres, ou de points lumineux, en particulier des LED, situés sur différentes surfaces et niveaux, et
**en ce que** le dispositif d'évaluation (58) est réalisé de telle manière que, à partir des images des cibles de référence (57, 59) reçues sur les unités d'enregistrement d'images (46, 48), il détermine l'écart et le déplacement angulaire des unités de mesure (22, 24) l'une par rapport à l'autre, ainsi que l'inclinaison des deux unités de mesure (22, 24), par comparaison avec les images de référence des cibles de référence (57, 59), et qu'il tient compte de l'écart et du déplacement angulaire des unités de mesure (22, 24), ainsi que de l'inclinaison des deux unités de mesure (22, 24) pour déterminer les données de la géométrie du véhicule automobile.

5. Dispositif selon l'une quelconque des revendications précédentes, **caractérisé en ce qu'**un capteur de mouvement (52, 56) est prévu sur au moins l'une des unités de mesure (22, 24), capteur qui, lorsqu'il détecte un mouvement de l'une au moins des unités de mesure (22, 24), déclenche l'enregistrement d'une image des cibles de mesure et de référence (12, 14, 16, 18, 57, 59) par les unités d'enregistrement d'images (46, 48).

6. Dispositif selon l'une quelconque des revendications précédentes, **caractérisé en ce que**, en outre, un capteur de mouvement (52, 56) est prévu qui, lorsqu'il détecte un mouvement d'au moins l'une des cibles de mesure ou de référence (12, 14, 16, 18, 57, 59) ou un mouvement du véhicule automobile, déclenche l'enregistrement d'une image des cibles de mesure et de référence (12, 14, 16, 18, 57, 59) par les unités d'enregistrement d'images (46, 48).

7. Dispositif selon l'une quelconque des revendications précédentes, **caractérisé en ce que** les unités d'enregistrement d'images (46, 48) ainsi que l'unité d'évaluation (58) sont réalisées de manière à effectuer un enregistrement périodique ou continu d'images des cibles de mesure et de référence (12, 14, 16, 18, 57, 59).

8. Dispositif selon l'une quelconque des revendications précédentes, **caractérisé en ce que** le dispositif optique (26, 36) est un prisme, un séparateur de faisceau, un miroir, une lentille ou une combinaison de ces éléments.

9. Poste de mesure sur lequel est installé un véhicule automobile, sur les roues (4, 6, 8, 10) duquel sont fixées des cibles de mesure (12, 14, 16, 18), et doté d'un dispositif de contrôle de la géométrie des trains roulants d'un véhicule automobile selon l'une quelconque des revendications précédentes,
**caractérisé en ce que** l'unité de mesure de gauche (22) est positionnée sur le côté gauche du véhicule de telle sorte que la cible de mesure (12) sur la roue avant gauche (4) et la cible de mesure (14) sur la roue arrière gauche (6) du véhicule automobile sont détectables depuis l'unité de mesure de gauche (22) ; et
**en ce que** l'unité de mesure de droite (24) est positionnée sur le côté droit du véhicule de telle sorte que la cible de mesure (16) sur la roue avant droite (8) et la cible de mesure (18) sur la roue arrière droite (10) du véhicule automobile sont détectables depuis l'unité de mesure de droite (24).

10. Procédé de contrôle de la géométrie des trains roulants d'un véhicule automobile comprenant :
la fixation de cibles de mesure (12, 14, 16, 18) sur les roues (4, 6, 8, 10) d'un véhicule automobile ;
le positionnement d'une unité de mesure de gauche (22) sur le côté gauche du véhicule automobile de telle sorte que la cible de mesure (12) sur la roue avant gauche (4) et la cible de mesure (14) sur la roue arrière gauche (6) du véhicule automobile sont détectables depuis l'unité de mesure de gauche (22), l'unité de mesure de gauche (22) présentant une cible de référence (57) visible par une unité de mesure de droite (24), un dispositif optique (26) et une unité d'enregistrement d'images (46) ;
le positionnement de l'unité de mesure de droite (24) sur le côté droit du véhicule automobile de telle sorte que la cible de mesure (16) sur la roue avant droite (8) et la cible de mesure (18) sur la roue arrière droite (10) du véhicule automobile sont détectables depuis l'unité de mesure de droite (24), l'unité de mesure de droite (24) présentant une cible de référence (59) visible par l'unité de mesure de gauche (22), un dispositif optique (36) et une unité d'enregistrement d'images (48) ;
la production, par le dispositif optique (26) de l'unité de mesure de gauche (22), d'une image de la cible de mesure (12) de la roue avant gauche (4) sur une première zone d'image (74, 82, 90) d'une surface d'enregistrement d'images (72, 80 88) de l'unité d'enregistrement d'images (46) de l'unité de mesure de gauche (22), d'une image de la cible de mesure (14) de la roue arrière gauche (6) sur une deuxième zone d'image (76, 84, 92) de ladite surface d'enregistrement d'images (72, 80, 88) et d'une image de la cible de référence (59) de l'unité de mesure de droite (24) sur une troisième zone d'image (78, 86, 94) de ladite surface d'enregistrement d'images (72, 80, 88) et la détection simultanée de ces images par l'unité d'enregistrement d'images (46) de l'unité de mesure de gauche (22) ;
la production, par le dispositif optique (36) de l'unité de mesure de droite (24), d'une image de la cible de mesure (16) de la roue avant droite (8) sur une première zone d'image (74, 82, 90) d'une surface d'enregistrement d'images (72, 80 88) de l'unité d'enregistrement d'images (48) de l'unité de mesure de droite (24), d'une image de la cible de mesure (18) de la roue arrière droite (10) sur une deuxième zone d'image (76, 84, 92) de ladite surface d'enregistrement d'images (72, 80, 88) et d'une image de la cible de référence (57) de l'unité de mesure de gauche (22) sur une troisième zone d'image (78, 86, 94) de ladite surface d'enregistrement d'images (72, 80, 88) et la détection simultanée de ces images par l'unité d'enregistrement d'images (48) de l'unité de mesure de droite (24) ;
la détermination de la position relative des cibles de référence (57, 59) et des données de la géométrie du véhicule automobile par un dispositif d'évaluation (58) à partir des images des cibles de mesure (12, 16) des roues avant (4, 8), des cibles de mesure (14, 18) des roues arrière (6, 10) et des cibles de référence (57, 59) par comparaison avec des images de référence qui ont été prises chacune selon un angle connu et un écart connu et qui ont été enregistrées dans le dispositif d'évaluation (58).
